# EUROPÄISCHE PATENTANMELDUNG

(11) **EP 0 972 899 A2**
(43) Veröffentlichungstag der Anmeldung: **19.01.2000**
(21) Anmeldenummer: 99112261.5
(22) Anmeldetag: 02.07.1999
(51) Int. Cl.: E05B 65/20, E05B 47/06

(54) **Schliesseinrichtung, insbesondere für Kraftfahrzeugtüren**

(30) Priorität: 11.07.1998 DE 19831260
(71) Anmelder: Mannesmann VDO Aktiengesellschaft, 60388 Frankfurt am Main (DE)
(72) Erfinder: Zintler, Albert, 64521 Gross-Gerau (DE)
(74) Vertreter: Klein, Thomas, Dipl.-Ing.

(57) **Zusammenfassung**

Die Erfindung betrifft eine Schließeinrichtung, insbesondere für Türen von Fahrzeugen, mit Schloßelementen wie Drehfalle (1.1) und Sperrklinke (1.9), wobei wenigstens ein Schloßelement zumindest in Abhängigkeit der Betätigung einer Handhabe von einer Verriegelungsstellung in eine Entriegelungsstellung gebracht wird, die gekennzeichnet ist durch manuell betätigbare Mittel (3), mit denen das wenigstens eine Schloßelement von der Entriegelungsstellung in die Verriegelungsstellung gebracht werden kann, wobei die Mittel (3) nicht als ein mit einem Schlüssel zu betätigender Schließzylinder ausgebildet sind.

## Beschreibung

Die Erfindung betrifft eine Schließeinrichtung, insbesondere für Kraftfahrzeugtüren, mit Schloßelementen wie Drehfalle und Sperrklinke gemäß den Merkmalen des Oberbegriffes des Patentanspruches 1.

Aus der DE 42 28 233 A1 ist eine solche Schließeinrichtung bekannt, bei der eine Drehfalle vorgesehen ist, die einen Schließbolzen umgreift oder freigibt, um somit eine Tür im geschlossenen Zustand zu halten oder eine Überführung in den geöffneten Zustand zu ermöglichen. In der Verriegelungsstellung (Tür geschlossen) wird dabei die Drehfalle von einer Sperrklinke arretiert, so daß der Schließbolzen in dieser Stellung ebenfalls arretiert ist.

Zum Entriegeln (Öffnen der Tür) ist es vorgesehen, daß die Betätigung einer Handhabe (wie zum Beispiel ein Türinnengriff oder ein Türaußengriff) mittels Schalter erfaßt wird, wobei das Ausgangssignal eines Schalters an eine zentrale Karosserieelektronik geleitet wird, wobei die zentrale Karosserieelektronik wiederum einen Stellantrieb, der ebenfalls als Schloßelement zu bezeichnen ist, ansteuert. Die Ansteuerung des Stellantriebes durch die zentrale Karosserieelektronik bewirkt, daß ein Stößel eines den Stellantrieb bildenden Elektromagneten ausgefahren wird und dabei auf ein Ende der hebelartig ausgebildeten Sperrklinke in dem Sinne wirkt, daß die Sperrklinke nach Kraftauflagung durch den Stößel die Drehfalle freigibt. Damit ist eine Öffnungshilfe realisiert.

Da das gesamte System nur mit elektrischer Energie (zentrale Stromversorgung des Fahrzeuges) funktioniert, sind in der DE42 28 233 A1 schon Maßnahmen ergriffen worden, um zu ermöglichen, daß die Tür geöffnet werden kann, wenn die zentrale Spannungsversorgung ausfällt. Zu diesem Zweck stehen die Handhaben über Verbindungselemente wie Bowdenzüge, Hebel und dergleichen mit einer speziell ausgestalteten Sperrklinke in Wirkverbindung, so daß im Falle des Stromausfalles die Sperrklinke durch mechanische Betätigung der Handhabe entriegelt und damit die Tür geöffnet werden kann. Dies ist unter Sicherheitsaspekten besonders wichtig, da vermieden werden muß, daß bei Stromausfall Personen in dem Fahrzeug eingeschlossen sind.

Diese Mittel, die eine mechanische Redundanz darstellen, sind jedoch nur geeignet, um die Sperrklinke im Falle eines Stromausfalles zu entriegeln, damit die Tür geöffnet werden kann. Nicht betrachtet worden ist jedoch der Fall, daß der Strom ausgefallen ist und sich die Sperrklinke in der entriegelten Position befindet. Für diesen Fall wäre zwar ein Öffnen der Tür möglich; nicht möglich ist jedoch das wirksame Verschließen (Verriegeln) der Tür. Dies ist besonders dann von Nachteil, wenn in einem Notfall (zum Beispiel Stromausfall der zentralen Stromversorgung) das Fahrzeug von den Insassen verlassen werden muß, aber nicht wirksam verriegelt werden kann.

Aus der DE 196 19 849 A1 ist ebenfalls eine Schließeinrichtung bekannt, die auf dem Prinzip beruht, daß die Sperrklinke, wenn eine Entriegelung stattfinden soll, über ein Koppelelement und Bowdenzüge mit der Handhabe in Wirkverbindung gebracht wird, so daß die Betätigung einer Handhabe die Entriegelung der Sperrklinke und damit der Drehfalle bewirkt Soll keine Entriegelung stattfinden (zum Beispiel in der Diebstahlsicherungsstellung), wird das Koppelelement in eine solche Stellung gebracht, die bewirkt, daß die Betätigung der Handhabe "ins Leere geht" und die Sperrklinke weiterhin die Drehfalle arretiert. Zur Bewegung des Koppelelementes von der einen in die andere Position ist ein von einer Steuereinrichtung ansteuerbarer Stellantrieb vorgesehen, der hierbei wieder als Elektromagnet mit Stößel und einem auf das Koppelelement wirkenden Hebel ausgebildet ist. Bei dieser aus der DE 196 19 849 A1 bekannten Schließeinrichtung sind zwar schon Maßnahmen ergriffen worden, um im Notfall (insbesondere bei einem Stromausfall der eine Bewegung des Stellantriebes nicht mehr zuläßt) das Koppelelement zu bewegen. Bei diesen Mitteln handelt es sich um einen Schließzylinder, der über Verbindungselemente mit dem Koppelelement verbunden ist, um somit mittels eines in den Schließzylinder einführbaren Schlüssels das Koppelelement in seinen beiden Stellungen hin- und herbewegen zu können. Dies funktioniert zwar an und für sich zufriedenstellend, widerspricht aber den heutigen Komfortansprüchen moderner Fahrzeuge, da bei diesen ein sogenannter "keyless entry", also ein Zugang zum Fahrzeug ohne den ansich bekannten Zündschlüssel, gefordert ist. Dies bedeutet, daß zum Betätigen der Zentralverriegelung (Entriegeln und Verriegeln der Türen und dergleichen) eine Fernbedienung eingesetzt wird, über die mittels Tastendruck die Zentralverriegelung betätigt wird. Somit stellt dieser Schließzylinder und das Mitführen eines entsprechenden Schlüssels unter den heutigen Komfortaspekten einen nicht mehr haltbaren Zustand dar.

Der Erfindung liegt daher die Aufgabe zugrunde, eine Schließeinrichtung bereitzustellen, die nicht nur zuverlässig funktioniert, sondern auch im Notfall ohne Schlüssel nicht nur entriegelt, sondern vor allem auch verriegelt werden kann.

Diese Aufgabe ist durch die Merkmale des Patentanspruches 1 gelöst.

Erfindungsgemäß sind manuell betätigbare Mittel vorgesehen, mit denen das wenigstens eine Schloßelement von der Entriegelungsstellung in die Verriegelungsstellung gebracht werden kann, wobei die Mittel nicht als ein mit einem Schlüssel zu betätigender Schließzylinder ausgebildet sind.

Aus dem zitierten Stand der Technik war es bekannt, die Schließeinrichtung so auszugestalten, daß im Notfall die Türen über die Handhaben geöffnet werden können. Durch die Erfindung wird nun auch das Problem gelöst, daß die Schließeinrichtung auch in die Verriegelungsstellung gebracht werden kann, wenn ein Notfall, insbesondere ein Ausfall der Stromversorgung, vorliegt. Damit ist gewährleistet, daß das Fahrzeug während dieses Notfalles von den Insassen verlassen und vor allen Dingen auch verriegelt werden kann, um sich von dem Fahrzeug zu entfernen. Damit können sich die Insassen von dem Fahrzeug entfernen, was insbesondere erforderlich ist, wenn das Fahrzeug auf einer viel befahrenen Straße (insbesondere den Seitenstreifen einer Autobahn) abgestellt werden muß. Erst mit Herstellen der Stromversorgung wird die Schließeinrichtung wieder betriebsbereit, so daß diese eingestellte Verriegelungsstellung aufhebbar ist. Ein solcher Stromausfall kann zum Beispiel durch eine defekte Batterie, eine Kabelunterbrechung, einen Crash oder dergleichen erfolgen.

In Weiterbildung der Erfindung wirken die Mittel auf ein von einem Stellantrieb betätigbaren Koppelelement, wobei das Koppelelement bewirkt, daß zwischen einer Handhabe und dem Schloßelement eine Wirkverbindung herstellbar ist oder nicht. Diese Ausgestaltung bezieht sich auf eine Schließeinrichtung, die gemäß der DE 196 19 849 A1 ausgestaltet ist. Insofern wird auch die Ausgestaltung und Wirkungsweise der in der DE 196 19 849 A1 beschriebenen Schließeinrichtung Bezug genommen. Dies bedeutet, daß die Mittel, mit denen das wenigstens eine Schloßelement von der Entriegelungsstellung in die Verriegelungsstellung gebracht werden kann, auf ein Schloßelement wie Drehfalle oder Sperrklinke, aber auch auf Schloßelemente wie Stellantrieb, Stößel oder Hebel des Stellantriebes und dergleichen wirken können. Allen Ausführungsformen gemeinsam ist, daß mittels der erfindungsgemäßen Mittel das Fahrzeug, zumindest eine Tür, verriegelt werden kann, um das Fahrzeug verlassen zu können.

In Weiterbildung der Erfindung wirken die Mittel auf einen Stellantrieb, welcher bewirkt, daß ein Schloßelement, insbesondere eine Sperrklinke von der Entriegelungsstellung in die Verriegelungsstellung gebracht werden kann. Diese Ausführungsform bezieht sich auf die Ausgestaltung der aus der DE 42 28 233 A1 bekannten Schließeinrichtung, so daß auf die Ausgestaltung und Wirkungsweise dieser bekannten Schließeinrichtung wieder Bezug genommen wird.

In Weiterbildung der Erfindung sind die Mittel nur im Sinne einer Betätigung in Richtung der Verriegelungsstellung betätigbar. Dies hat den Vorteil, daß die Betätigung der Mittel nur eine Verriegelung, nicht aber eine Entriegelung bewirkt, so daß eine Betätigung der Mittel im Sinne einer Betätigung in Richtung der Entriegelungsstellung nicht zu einem Öffnen der Türen und damit zu einem Diebstahl des Fahrzeuges führen könnte.

In Weiterbildung der Erfindung ist ein Bedienteil der Mittel an einer solchen Stelle in einer Tür oder dergleichen des Fahrzeuges angeordnet, wobei die Stelle, in der das Bedienteil zur manuellen Betätigung angeordnet ist, im geschlossenen Zustand der Tür nicht und im geöffneten Zustand der Tür erreichbar ist. Auch damit wird verhindert, daß die Mittel erreichbar sind, wenn sich die Tür im geöffneten Zustand befindet. Weiterhin wird damit erreicht, daß das Bedienteil, wie zum Beispiel ein über die Außenfläche der Tür hervorstehender Hebel, zum Öffnen der Tür mißbraucht werden kann. Denn nachdem die Tür mittels der schon bekannten mechanischen Redundanz im Notfall über die Betätigung der Handhabe geöffnet wurde, kann das Bedienteil betätigt werden, um die Schließeinrichtung von der Entriegelungsstellung in die Verriegelungsstellung zu bringen. Anschließend kann die Tür geschlossen werden und ist damit automatisch verriegelt. Gleichzeitig ist die Stelle, in der das Bedienteil angeordnet ist, nicht mehr zugänglich, so daß ein Entriegeln nicht stattfinden kann. Eine vorteilhafte Anordnung eines solchen Bedienteiles ist eine Stirnseite der Tür. in der auch der Schließbolzen an der Tür oder an einer Säule des Fahrzeuges angeordnet ist. Denkbar ist aber auch eine Anordnung des Bedienteiles in Richtung des Innenraumes des Fahrzeuges, so daß in einem solchen Fall eventuell sich noch im Fahrzeug befindende Personen dieses verlassen können.

In Weiterbildung der Erfindung sind die Mittel in den wenigstens zwei Stellungen "entriegelt" und "verriegelt" festsetzbar. Damit ist gewährleistet, daß die Mittel nicht versehentlich, insbesondere durch Vibrationen des Fahrzeuges, von der Entriegelungsstellung in die Verriegelungsstellung gebracht werden, wodurch ein Öffnen der Türen versehentlich nicht mehr möglich wäre und was dadurch wirksam verhindert wird.

Im eingangs beschriebenen und bei der folgenden Figurenbeschreibung wurde beziehungsweise wird Bezug genommen auf die beiden aus der DE 42 28 233 A1 und DE 196 19 849 A1 bekannten Schließeinrichtungen, wobei jedoch der Erfindungsgedanke nicht auf diese bekannten Ausgestaltungen beschränkt ist.

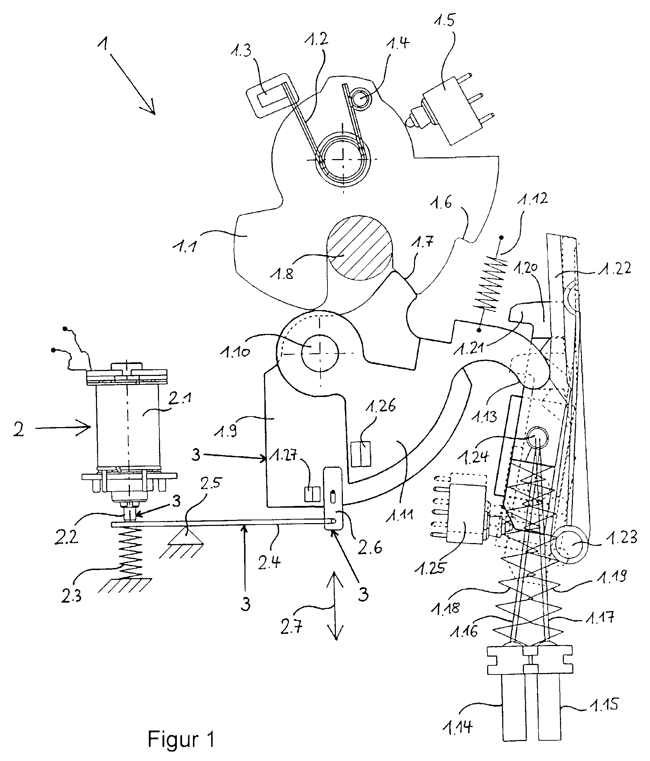

Ein Ausführungsbeispiel einer erfindungsgemäßen Schließeinrichtung ist im folgenden beschrieben und anhand der Figur 1 erläutert.

Eine in Figur 1 gezeigtes Schließeinrichtung 1 weist eine Drehfalle 1.1 auf, die gegen eine Drehfallenfeder 1.2 wirkt, wobei die Drehfallenfeder 1.2 zwischen einem ortsfesten Anschlag 1.3 und an einem an der Drehfalle 1.1 angeordneten Anschlag 1.4 eingespannt ist. Die Stellung der Drehfalle 1.1 ist mittels eines Drehfallenschalters 1.5 erfaßbar. Weiterhin weist die Drehfalle 1.1 einen Absatz 1.6 auf, mit dem eine Zwischenraststellung (Vorraste) realisiert ist. Weiterhin ist eine Anlagefläche 1.7 vorhanden, über die die Drehfalle 1.1 in ihrer Arretierstellung haltbar ist. Die U-förmig ausgestaltete Drehfalle 1.1 umschließt mit ihren beiden Schenkeln einen Schließkeil 1.8 und hält somit beispielsweise in an sich bekannter Weise eine Kraftfahrzeugtür in ihrer Schließstellung. Eine Sperrklinke 1.9, die um einen Drehpunkt 1.10 verschwenkbar ist, liegt mit einem nicht näher bezeichneten Vorsprung in der Figur 1 an der Anlagefläche 1.7 der Drehfalle 1.1 an. Ebenfalls um den Drehpunkt 1.10 oder um einen anderen Drehpunkt herum ist ein Koppelelement 1.11 gelagert, das von einer Feder 1.12 in der in Figur 1 gezeigten Stellung (gegebenenfalls unter Anlage an einem nicht dargestellten Anschlag) gezeigten Position gehalten wird. An einem Vorsprung 1.13 des Koppelelementes 1.11 greifen Mittel an, die es gestatten, das Koppelelement 1.11 aus seiner gezeigten Lage um den Drehpunkt 1.10 zu verdrehen. Diese Mittel stehen beispielsweise mit einem Türinnengriff oder einem Türaußengriff oder sonstigen Handhaben in Verbindung, mit denen das Koppelelement 1.11 mechanisch betätigbar ist. In Figur 1 ist dargestellt, daß es sich bei diesen Mitteln um Bowdenzüge 1.14 und 1.15 mit jeweils einer Seele 1.16 und 1.17 handelt, die wiederum mittels Federn 1.18 beziehungsweise 1.19 vorgespannt sind. Die Seelen 1.16 und 1.17 betätigen einen Hebel 1.20, der einen Vorsprung 1.21 oder eine an dem Vorsprung 1.13 anliegende, in etwa dreieckförmige Nase aufweist, der bei Betätigung des Türinnengriffes beziehungsweise des Türaußengriffes in Wirkverbindung mit dem Vorsprung 1.13 gebracht wird, so daß das Koppelelement 1.11 verdreht wird und unter bestimmten Umständen, die im weiteren noch erläutert werden, die Sperrklinke 1.9 aus ihrer gezeigten Arretierstellung in eine Öffnungsstellung bringt, so daß die Drehfalle 1.1 den Schließkeil 1.8 freigibt. Der Hebel 1.20 ist beispielsweise linear verschiebbar an einem Anlageteil 1.22 angeordnet, wobei dieses Anlageteil 1.22 um einen Drehpunkt 1.23 verschwenkbar sein kann, aber nicht muß. Die Seelen 1.16 und 1.17 sind an einem Befestigungspunkt 1.24 an dem Hebel 1.20 befestigt. Dieser Befestigungspunkt 1.24 kann derart ausgestaltet sein, daß die Betätigung des Türinnengriffes unabhängig von einer Bewegung des Türaußengriffes ist und umgekehrt. Die Betätigung kann mittels eines Schalters 1.25 erfaßt werden.

Zur Betätigung der Schließeinrichtung 1 ist nun eine Stelleinrichtung 2 vorgesehen, bei der es sich beispielsweise um einen Elektromagnet 2.1 mit einem linear verschiebbaren Stellglied 2.2 handelt, das gegen eine Feder 2.3 wirkt, aber nicht wirken muß. Die Verschiebung des Stellgliedes 2.2 wirkt auf einen Hebel 2.4, der um einen Drehpunkt 2.5 verschwenkbar ist. Anstelle der Linearbewegung kann auch eine Stelleinrichtung mit einer Rotationsbewegung oder einer Kombination von beiden vorgesehen werden. Die Verschwenkung des Hebels um den Drehpunkt 2.5 bewirkt eine im wesentlichen lineare Verschiebung eines Koppelgliedes 2.6 in einer Bewegungsrichtung 2.7. Es ist auch denkbar, daß die Stelleinrichtung direkt oder untersetzt oder übersetzt an dem Koppelglied 2.6 angreift, wobei auch dann wieder lineare oder rotatorische Bewegungen denkbar sind. In Figur 1 ist gezeigt, daß das Koppelglied 2.6 im wesentlichen eine längliche Rechteckform aufweist, wobei auch andere den Konstruktionen angepaßte Ausführungsformen (wie beispielsweise eine keilförmige Ausgestaltung) denkbar sind. Weiterhin ist denkbar, daß das Koppelglied 2.6 und/oder die das Koppelglied 2.6 betätigenden Komponenten (zum Beispiel Stelleinrichtung 2, Hebel 2.4) an der Sperrklinke 1.9 oder dem Koppelelement 1.11 angeordnet sind.

Das Koppelelement 1.11 weist einen Anschlag 1.26 und die Sperrklinke 1.9 einen Anschlag 1.27 auf, die zueinander versetzt angeordnet sind, wobei sich das Koppelglied 2.6 zwischen den beiden Anschlägen 1.26 und 1.27 befinden kann oder nach Betätigung der Stelleinrichtung 2 aus diesem Bereich der Anschläge heraus verschiebbar ist oder umgekehrt. Befindet sich das Koppelglied 2.6 in der eingekoppelten Stellung (in Figur 1 ist die ausgekoppelte Stellung gezeigt), wird bei Betätigung des Türinnengriffes beziehungsweise Türaußengriffes der Anschlag 1.26 durch Verdrehung des Koppelelementes 1.11 gegen das Koppelglied 2.6 und dieses gegen den Anschlag 1.27 der Sperrklinke 1.9 gedrückt, so daß über diesen Weg die Sperrklinke 1.9 aus ihrer Arretierstellung in ihre Öffnungsstellung bewegt wird und damit die Drehfalle 1.1 freigibt. Wird das Koppelglied 2.6 durch entsprechende Ansteuerung der Stelleinrichtung 2 aus dem Bereich der Anschläge (insbesondere aus dem Bereich des Anschlages 1.26) heraus bewegt, kann zwar das Koppelelement 1.11 bei Betätigung des Türinnengriffes beziehungsweise Türaußengriffes um den Drehpunkt 1.10 verschwenkt werden, es kann jedoch nicht zu einer Mitnahme der Sperrklinke 1.9 kommen, so daß die Drehfalle 1.1 und damit der Schließkeil 1.8 nicht freigebbar ist, wodurch eine Diebstahlsicherungsstellung und weiter eine Kindersicherung sowie die Verhinderung unerwünschter Öffnung von außen erreicht ist.

Bezüglich der Stellung des Koppelgliedes 2.6 in der Diebstahlsicherungsstellung beziehungsweise in einer entriegelten Stellung gibt es mehrere Möglichkeiten. Die eine ist, daß das Koppelglied 2.6 sich grundsätzlich (beispielsweise bei nicht betätigter Stelleinrichtung 2 und Ausgestaltung der Feder 2.3 als Druckfeder) außerhalb des Bereiches der Anschläge 1.26 und 1.27 befindet (Diebstahlsicherungsstellung). Bei Betätigung der Handhabe nach einem Öffnungswunsch der Bedienperson, die beispielsweise durch einen Hand-Sender legitimiert ist und einen entsprechenden Sendebefehl abgegeben hat, wird der dann aktivgeschaltete Schalter 1.25 und davon ausgehend die Stelleinrichtung 2 betätigt und das Koppelglied 2.6 in den Bereich der Anschläge 1.26 und 1.27 bewegt, bevor der Vorsprung 1.21 des Hebels 1.20 den Vorsprung 1.13 des Koppelelementes 1.11 mitnimmt und die Drehfalle 1.1 freigibt. Darüber hinaus ist es denkbar, das Koppelglied 2.6 im unbetätigten Zustand der Stelleinrichtung 2 in dem Bereich zwischen den Anschlägen 1.26 und 1.27 zu belassen und nur für den Fall, daß die Diebstahlsicherung oder eine Kindersicherung eingelegt sind, aus diesem Bereich zu bewegen (durch Betätigung der Stellemrichtung 2).

Mit den Pfeilen mit der Bezugsziffer 3 sind nun die Stellen bezeichnet, an denen die manuell betätigbaren Mittel, mit denen das wenigstens eine Schloßelement wie Drehtalle 1.1, Sperrklinke 1.9, das Koppelelement 2.6 oder auch Teile des Stellantriebes 2 von der Entriegelungsstellung in die Verriegelungsstellung gebracht werden kann, angreifen.

### Bezugszeichenliste:

- 1: Schließeinrichtung
- 1.1: Drehfalle
- 1.2: Drehfallenfeder
- 1.3: Ortsfester Anschlag
- 1.4: Anschlag
- 1.5: Drehfallenschalter
- 1.6: Absatz
- 1.7: Anlagefläche
- 1.8: Schließkeil
- 1.9: Sperrklinke
- 1.10: Drehpunkt
- 1.11: Koppelelement
- 1.12: Feder
- 1.13: Vorsprung
- 1.14: Bowdenzug
- 1.15: Bowdenzug
- 1.16: Seele
- 1.17: Seele
- 1.18: Feder
- 1.19: Feder
- 1.20: Hebel
- 1.21: Vorsprung
- 1.22: Anlageteil
- 1.23: Drehpunkt
- 1.24: Befestigungspunkt
- 1.25: Schalter
- 2: Stelleinrichtung
- 1.26: Elektromagnet
- 1.27: Verschiebbares Stellglied
- 1.28: Feder
- 1.29: Hebel
- 1.30: Drehpunkt
- 1.31: Koppelglied
- 1.32: Bewegungsrichtung
- 3: Wirkstellen

## Patentansprüche

1. Schließeinrichtung, insbesondere für Türen von Fahrzeugen, mit Schloßelementen wie Drehtalle und Sperrklinke, wobei wenigstens ein Schloßelement zumindest in Abhängigkeit der Betätigung einer Handhabe von einer Verriegelungsstellung in eine Entriegelungsstellung gebracht wird, gekennzeichnet durch manuell betätigbare Mittel, mit denen das wenigstens eine Schloßelement von der Entriegelungsstellung in die Verriegelungsstellung gebracht werden kann, wobei die Mittel nicht als ein mit einem Schlüssel zu betätigender Schließzylinder ausgebildet sind.

2. Schließeinrichtung nach Anspruch 1, dadurch gekennzeichnet, daß die Mittel auf ein von einem Stellantrieb betätigbaren Koppelelement wirken, wobei das Koppelelement bewirkt, daß zwischen einer Handhabe und dem Schloßelement eine Wirkverbindung herstellbar ist oder nicht.

3. Schließeinrichtung nach Anspruch 1 oder 2, dadurch gekennzeichnet, daß die Mittel auf einen Stellantrieb wirken, wobei der Stellantrieb bewirkt, daß ein Schloßelement, insbesondere eine Sperrklinke, von der Verriegelungsstellung in die Entriegelungsstellung gebracht werden kann.

4. Schließeinrichtung nach einem der vorhergehenden Ansprüche, dadurch gekennzeichnet, daß die Mittel nur im Sinne einer Betätigung in Richtung der Verriegelungsstellung betätigbar sind.

5. Schließeinrichtung nach einem der vorhergehenden Ansprüche, dadurch gekennzeichnet, daß ein Bedienteil der Mittel an einer solchen Stelle in einer Tür oder dergleichen des Fahrzeuges angeordnet ist, die zur manuellen Betätigung des Bedienteiles im geschlossenen Zustand der Tür nicht und im geöffneten Zustand der Tür erreichbar ist.

6. Schließeinrichtung nach einem der vorhergehenden Ansprüche, dadurch gekennzeichnet, daß die Mittel in den wenigstens zwei Stellungen "entriegelt" und "verriegelt" festsetzbar sind.
